# EUROPÄISCHE PATENTSCHRIFT

(11) **EP 0 579 705 B1**
(45) Veröffentlichungstag und Bekanntmachung des Hinweises auf die Patenterteilung: **15.11.1995**
(21) Anmeldenummer: 92908917.5
(22) Anmeldetag: 01.04.1992
(51) Int. Cl.: A61C 17/06

(54) **ABSCHEIDER ZUR TRENNUNG EINES FESTSTOFF-FLÜSSIGKEITSGEMISCHES**
SEPARATOR FOR LIQUID/SOLID MIXTURES
SEPARATEUR POUR MELANGE LIQUIDE-SOLIDE

(30) Priorität: 12.04.1991 AT 775/91
(43) Veröffentlichungstag der Anmeldung: 26.01.1994
(73) Patentinhaber: Trawöger, Werner, 6173 Oberperfuss (AT); PREGENZER, Bruno, 6173 Oberperfuss (AT)
(72) Erfinder: Trawöger, Werner, 6173 Oberperfuss (AT); PREGENZER, Bruno, 6173 Oberperfuss (AT)
(74) Vertreter: Torggler, Paul, Dr.
(86) Internationale Anmeldenummer: AT9200043
(87) Internationale Veröffentlichungsnummer: WO9218062

(56) Entgegenhaltungen:
- EP-A- 0 300 439
- WO-A-89/04152
- DE-U- 8 702 001

## Beschreibung

Die Erfindung betrifft einen Abscheider zur Trennung eines Feststoff-Flüssigkeitsgemisches, insbesondere von dentalem Abwasser, mit einem Einlaß für das zu trennende Gemisch, mit einem Auslaß für die abgetrennte Flüssigkeit, mit einer Vollmantelzentrifuge, die eine an der Oberseite angeordnete Einlaßöffnung, eine dem Flüssigkeitsauslaß zugeordnete Übertrittsöffnung und einen Feststoffablauf aufweist, mit einem unterhalb des Feststoffablaufes abnehmbar angeordneten Absetzbehälter für die nach jeder Zentrifugierphase unter Schwerkrafteinwirkung mit einem Restflüssigkeitsanteil abfließenden Feststoffe, mit einer Pumpe, die ein sich bis oberhalb einer maximalen, vorgegebenen Sedimentationshöhe nach unten in den Absetzbehälter erstreckendes Ansaugrohr aufweist, und mit einer Leitung, die die Druckseite der Pumpe mit der Einlaßöffnung der Zentrifuge verbindet.

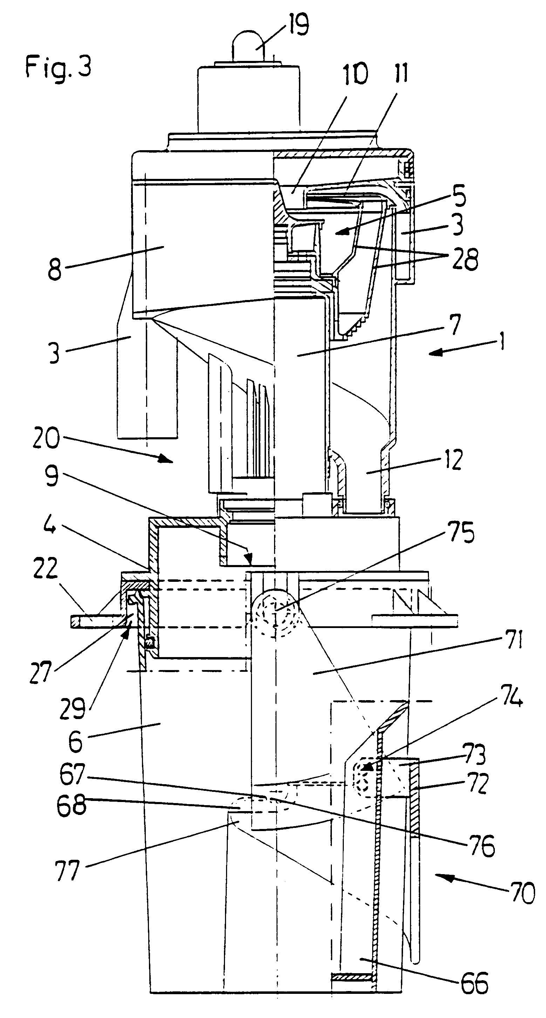

Ein derartiger Abscheider ist beispielsweise in Fig. 3 der WO-A-89/04152 beschrieben. Der Einlaß für das zu trennende Gemisch, das beispielsweise aus einer zahnärztlichen Ansaugeinrichtung oder aus einer Speischale stammt, liegt bei diesem Abscheider an der Oberseite der Zentrifuge und mündet in eine Gemischeinlaßkammer, aus der es in die Zentrifuge gelangt. Die nach unten gemeinsam mit Restflüssigkeit abfließenden Feststoffe sammeln sich im Absetzbehälter, aus dem die überstehende Flüssigkeit mittels der Pumpe wieder nach oben in den Gemischeinlaß gefördert wird. Bei Erreichen einer vorgegebenen Sedimentationshöhe wird der Absetzbehälter abgenommen und entleert bzw. gegen einen leeren ausgetauscht.

Es hat sich dabei gezeigt, daß in der Zuflußleitung zum Gemischeinlaß ein Vorsieb günstig bzw. sogar notwendig ist, um allzu große Teile vor dem Eintritt in die Zentrifuge zu hindern. Diese kommen vor allem aus der Speischale, in die sie beim Ausspülen des Mundes gelangen. Derartige größere Teile, wie Knochen oder Zahnsplitter, Amalgamstücke, oder auch Zellstoffreste usw. können, wenn sie nicht vorher entfernt werden, eine Unwucht der Zentrifuge bewirken oder den Reinheitsgrad der Flüssigkeit verringern.

Die Erfindung hat es sich daher zur Aufgabe gestellt, einen Abscheider der eingangs genannten Art so auszubilden, daß der Zentrifuge nur Feststoffteile in störungsfrei verarbeitbarer Größe zugeführt werden.

Erfindungsgemäß wird dies dadurch erreicht, daß der Einlaß für das zu trennende Gemisch an der Oberseite des Absetzbehälters vorgesehen ist.

Auf diese Weise gelangt das Gemisch zuerst in den Absetzbehälter, in dem vor allem die größeren Teile zu Boden sinken, und so von der Pumpe nur die überstehende Flüssigkeit sowie jene feine und feinste Feststoffteile in die Zentrifuge überführt werden, die aufgrund einer zu kurzen Verweilzeit noch nicht sedimentieren konnten, oder aufgrund einer momentanen, sehr hohen Wassermenge wieder aufgewirbelt werden.

Die Pumpe fördert somit nicht nur Restflüssigkeit aus der Zentrifuge zurück in die Zentrifuge, sondern die gesamte anfallende Flüssigkeit. Die Anordnung eines Sedimentierbehälters vor einer Zentrifuge ist zwar aus der SE-B- 427 988 bekannt, jedoch ist der dort nur angedeutete Sedimentationsbehälter mit einem in die Zentrifuge mündenden Überlauf und mit einem bodennahen Einlaß versehen, sodaß dieser im wesentlichen nur ein Vorsieb darstellt. Die Feststoffe werden in einem zweiten Behälter unterhalb der Zentrifuge gesammelt.

Derartige Abscheider stellen im allgemeinen Einbaugeräte in einen zahnärztlichen Stuhl oder ein sonstiges Praxisausstattungselement dar, und bedürfen somit einer Halterung, wobei der Freiraum zur Abnahme des Absetzbehälters nach unten gegeben sein muß. Eine erfindungsgemäße Ausführung sieht hiezu vor, daß der Abscheider einen mit Durchtrittsöffnungen versehenen Montagegrundkörper aufweist, auf dem das Zentrifugengehäuse angeordnet ist, und an dem der Absetzbehälter nach unten abnehmbar gehalten ist, wobei der Gemischeinlaß im Montagegrundkörper angeordnet ist.

Diese Ausführung erleichtert nicht nur die Montage des Abscheiders insbesondere bei der Nachrüstung bereits bestehender Arbeitsplätze, da die Montagegrundkörper entsprechend den jeweils örtlichen Gegebenheiten ausgebildet sein können, sondern erlaubt es auch, die Dimensionen, vor allem Länge und Breite des Absetzbehälters unabhängig von den Maßen des Zentrifugengehäuses zu wählen, an die der Absetzbehälter bei direktem Anbau an die Zentrifuge gebunden ist.

Für eine räumlich sehr kompakte Ausführung ist vorzugsweise vorgesehen, daß sich das Zentrifugengehäuse zum Montagegrundkörper hin verjüngt und der Gemischeinlaß in dem von der Verjüngung des Zentrifugengehäuses ausgesparten Bereich des Montagegrundkörpers vorgesehen ist. Im ausgesparten Bereich kann dann ein um eine zum Montagegrundkörper senkrechte Achse schwenkbares Winkelstück für einen in beliebige Richtung verdrehbaren Anschluß der Gemischzuführleitung vorgesehen sein. Die Pumpe ist vorzugsweise koaxial unterhalb der Zentrifuge vorgesehen und kann einen eigenen Antriebsmotor aufweisen. Pumpe und Zentrifuge können aber auch von einem gemeinsamen, dazwischen liegenden Antriebsmotor betrieben werden, da bei laufender Pumpe auch die Zentrifuge arbeiten muß.

Für die Umlenkung des über den Gemischeinlaß kommenden Gemisches sind in einer weiteren bevorzugten Ausführung das Ansaugrohr der Pumpe abschirmender Prallwände vorgesehen. Diese können vom Gemischeinlaß weg beispielsweise stufenartig nach beiden Seiten angeordnet sein, wobei eine letzte Prallwand jeweils vertikal verlaufen kann. Der unmittelbare Zutritt des Gemisches zum Ansaugrohr wird dadurch auch bei hohen Zuflußmengen bis zum 12 l/min und mehr, also bei extrem hohem Flüssigkeitsanteil verhindert.

Ein sich zum Montagegrundkörper verjüngendes Zentrifugengehäuse erlaubt es weiters auch die Verbindungsleitung zur Einlaßöffnung der Zentrifuge in dem durch die Verjüngung ausgesparten Bereich des Montagegrundkörpers unterzubringen.

Der erfindungsgemäße Abscheider läßt sich sowohl innerhalb des Unterdrucksystems der zahnärztlichen Absauganlage, als auch außerhalb dieses einsetzen. Für die Verwendung außerhalb des Unterdrucksystems ist vorzugsweise der Gemischeinlaß im Montagegrundkörper mit einem Rückschlagventil versehen, das der Druckseite einer Hilfspumpe zugeordnet ist. Die Hilfspumpe dient dabei dazu, das zu trennende Gemisch gegen den Saugluftunterdruck aus einer vorgesetzten Luftabscheidevorrichtung auszutragen, sodaß der Saugbetrieb für die Entleerung der Luftabscheidevorrichtung nicht unterbrochen werden muß.

Für die Verwendung innerhalb des Unterdrucksystems wird am Flüssigkeitsauslaß der Zentrifuge bzw. in der anschließenden Abflußleitung ein Rückschlagventil vorgesehen. Auch hier dient eine Hilfspumpe zur Überwindung des im Abscheider herrschenden Saugluftunterdrucks. Diese Hilfspumpe kann beispielsweise in die Abflußleitung eingesetzt sein, deren Wirkung kann aber auch dadurch erreicht werden, daß die Zentrifuge im Bereich der Flüssigkeitsübertrittsöffnung mit Pumpenflügeln bestückt ist.

Nachstehend wird nun die Erfindung an Hand der Figuren der beiliegenden Zeichnungen näher beschrieben, ohne darauf beschränkt zu sein.

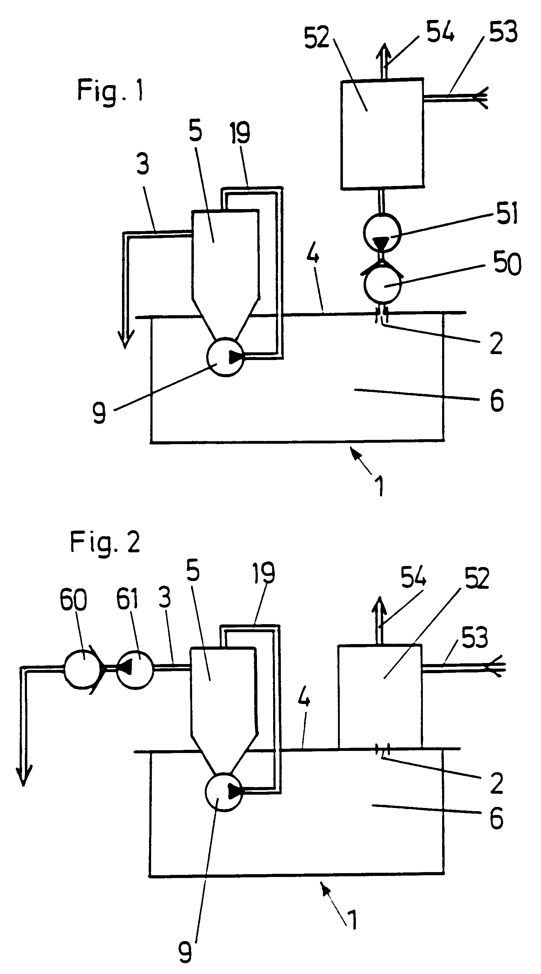

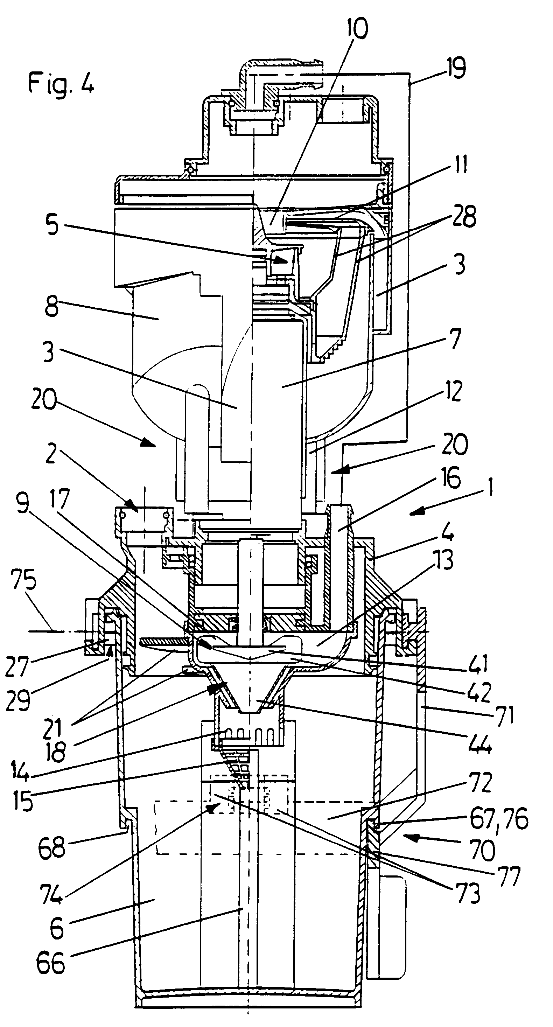

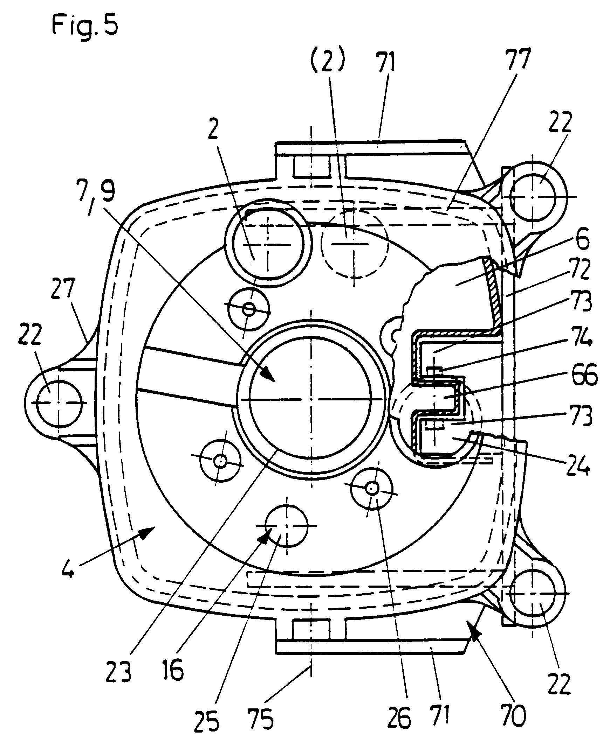

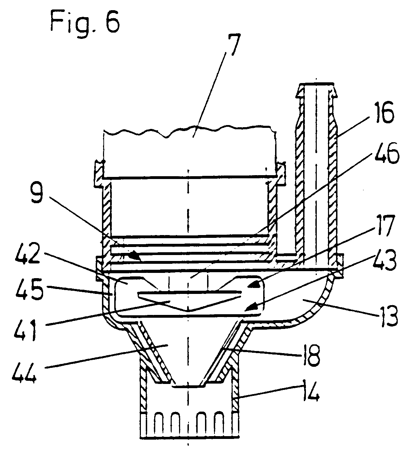

Die Fig. 1 und 2 zeigen schematisch zwei verschiedene Abscheideeinrichtungen zur Trennung von Saugluft, Feststoffe und Flüssigkeit, die Fig. 3 und 4 Vertikalschnitte durch einen erfindungsgemäßen Abscheider, die Fig. 5 eine Draufsicht auf eine Montagegrundkörper und die Fig. 6 eine vergrößerte Darstellung der im Abscheider verwendeten Pumpe.

Abscheideeinrichtungen gemäß den Fig. 1 und 2 bestehen aus einer Luftabscheidevorrichtung 52 mit einer Gemischzuflußleitung 53 und einer zu einer Saugpumpe führenden Reinluftleitung 54, und einem Abscheider 1 zur Trennung der Flüssigkeit und der Feststoffe. In der Ausführung nach Fig. 1 liegt der erfindungsgemäße Abscheider 1 außerhalb des Unterdrucksystems, d. h. zwischen der Luftabscheidevorrichtung 52 und dem Gemischeinlaß 2 des Abscheiders 1 ist eine Hilfspumpe 51 und an deren Rückseite ein Rückschlagventil 50 vorgesehen. In der Ausführung nach Fig. 2 ist der Abscheider 1 innerhalb des Unterdrucksystems vorgesehen, und der Flüssigkeitsauslaß 3 mit einer Hilfspumpe 61 und dem druckseitigen Rückschlagventil 60 bestückt.

Der Abscheider 1 setzt sich aus einem Absetzbehälter 6 zur Sedimentation von Feststoffen und einer in Durchflußrichtung an den Absetzbehälter 6 anschließenden Vollmantelzentrifuge 5 zusammen. Beide sind an einem Montagegrundkörper 4 angeordnet, der an einem zahnärztlichen Stuhl od. dgl. befestigbar ist, wobei der Absetzbehälter 6, wie aus den Fig. 3 und 4 näher ersichtlich ist, vom Montagegrundkörper 4 nach unten abnehmbar gehalten ist. Der Montagegrundkörper 4 ist mit Befestigungsbohrungen 22 versehen, die insbesondere an einem eigenen Adapterteil 27 vorgesehen sind. Je nach den gegebenen Einbauverhältnissen sind dann entsprechende Adapterteile 27 vorhanden, mit denen der Montagegrundkörper 4 versehen werden kann. Weitere Durchtrittsöffnungen sind im Montagegrundkörper 4 ausgebildet: eine Öffnung 23 zur Aufnahme des Motors 7 der Zentrifuge 5 und einer Pumpe 9, eine Öffnung 24 zum Einsetzen des Feststoffablaufes 12 der Zentrifuge 5, eine Öffnung 25 zur Durchführung einer nur schematisch gezeigten Verbindungsleitung 19 zwischen der Pumpe 9 und der Zentrifuge 5, Öffnungen 26 für Befestigungsschrauben zur gemeinsamen Fixierung des Zentrifugengehäuses 8 und des Pumpengehäuses 13, sowie der Gemischeinlaß 2, durch den das von der Luftabscheidevorrichtung 52 und/oder eine Speischale kommende Gemisch in den Abscheider 1 eingebracht wird. Wie angedeutet, kann auch ein zweiter Gemischeinlaß (2) vorgesehen sein, sodaß jede Zuleitung an einen eigenen Gemischeinlaß 2, (2) angesetzt werden kann. Das auf dem Montagegrundkörper 4 fixierte Zentrifugengehäuse 8 ist im unteren Teil verjüngt, wobei der Motor 7 zentral angeordnet ist, und enthält darüber zwei ineinander angeordnete Zentrifugenbehälter 28 der Vollmantelzentrifuge 5. In den inneren Zentrifugenbehälter 28 mündet der Einlaß 10 für das von der Pumpe 9 über die Verbindungsleitung 19 aus dem Absetzbehälter 6 hochgeförderte Gemisch und der äußere Zentrifugenbehälter 28 weist eine Übertrittsöffnung 11 auf, über die gereinigte Flüssigkeit in den Flüssigkeitsauslaß 3 gelangt. Feststoffe fließen mit Restflüssigkeit bei Stillstand der Zentrifuge 5 aufgrund der Schwerkraft nach unten und gelangen über den exzentrisch angeordneten Feststoffablauf 12 durch die Öffnung 24 in den Absetzbehälter 6. In den Gemischeinlaß 2, (2) des Montagegrundkörpers 4 ist drehbar ein nicht gezeigtes Winkelanschlußstück eingesetzt. Sowohl der Gemischeinlaß 2, (2) als auch die Öffnung 25 für die Verbindungsleitung 19 liegen in der durch die Verjüngung des Zentrifugengehäuses 8 bedingten Aussparung 20, also innerhalb des von der Zentrifuge 5 benötigten Raumes, sodaß eine äußerst kompakte, platzsparende Ausführung gegeben ist.

Eine nach unten offene Nut 29 des Montagegrundkörpers 4 dient dem Einschub des Absetzbehälters 6. Dieser ist mittels eines bügelförmigen Verriegelungselementes 70 fixiert, das um eine Achse 75 an der Außenwand der Nut 29 schwenkbar gelagert ist. Das Verriegelungselement 70 weist zwei seitlich außerhalb des Absetzbehälters 6 sich erstreckende Schwenkarme 71 und einen diese verbindenden Quersteg 72 auf. Jedem Schwenkarm 71 ist ein dazu parallel verlaufender Steg 77 zugeordnet, der in der Schließstellung in eine Tasche 68 des Absetzbehälters 6 eingreift. Eine an zumindest einem Steg 77 vorgesehene Rastausnehmung 76 verrastet an einer Nocke 67 in der Tasche 68 des Absetzbehälters 6. Der Absetzbehälter 6 ist aus lichtdurchlässigem Kunststoff gefertigt und weist an seiner zum Quersteg 72 weisenden Wandung eine vorstehende Längsrippe 66 auf. Der Quersteg 72 ist mit parallel zu den Seitenwänden der Längsrippe 66 abstehenden Laschen 73 versehen, an denen eine Sensoreinrichtung 74 ausgebildet ist. Diese umfaßt zumindestens eine, im gezeigten Ausführungsbeispiel, zwei Lichtschranken, wobei jeder Lichtstrahl die Längsrippe 66 durchdringt und der Messung der Sedimentationshöhe der Feststoffe dient. Die untere Lichtschranke reagiert bei 95 % der maximalen Füllhöhe durch ein Warnsignal, während bei Ansprechen der zweiten, die maximale Füllhöhe anzeigenden oberen Lichtschranke der Abscheider, vorzugsweise die gesamte Absauganlage, außer Betrieb gesetzt wird. Für den Wechsel des Absetzbehälters wird das Verriegelungselement 70 hochgeschwenkt, sodaß die Stege 77 den Absetzbehälter 6 freigeben, der dann nach unten abgenommen werden kann. Die Sensoreinrichtung 74 könnte noch weitere Sensorelemente umfassen, die beispielsweise jene beiden Niveaus der sich über den Feststoffen sammelnden Flüssigkeit erfassen, an denen der Motor 7 ein- und ausgeschaltet wird.

Das Pumpengehäuse 13 ist an der Unterseite des Montagegrundkörpers 4 befestigt, und weist einen hochstehenden Anschlußstutzen 16 auf, der durch die Öffnung 25 des Montagegrundkörpers 4 ragt, sodaß nach der Befestigung von Pumpe 9 und Zentrifuge 5 die Verbindungsleitung 19 montiert werden kann. Vom Pumpengehäuse 13 nach unten ragt ein zentrales Ansaugrohr 14, das im obersten Teil sich konisch verjüngt, im Mittelteil zylindrisch ausgebildet ist, und im untersten Teil umfangsseitige Durchbrechungen aufweist. Ein Schutzsieb 15 ist zumindest an der Seite des Gemischeinlasses 2 am Ansaugrohr 14 fixiert. Die Pumpe 9 weist ein Flügelrad 17 auf, das eine auf der Antriebswelle 46 befestigte Nabe 41, von dieser radial abstehende Flügel 42 und einen nach unten in den konischen Teil des Ansaugrohres 14 ragenden Hohlkegelstumpf 18 umfaßt. Der Hohlkegelstumpf 18 ist an den unteren Schmalseiten der Flügel 42 befestigt, die über die Nabe 41 axial nach unten vorstehen. Der Durchmesser der Nabe 41, deren untere Fläche eine Kegelfläche ist, entspricht etwa dem größten Durchmesser des Hohlkegelstumpfes 18. Durch die Halterung des Hohlkegelstumpfes 18 an den Flügeln 42 sind zwischen der Nabe 41 und dem oberen Rand des Hohlkegelstumpfes 18 Schlitze 43 zwischen den Flügeln 42 ausgebildet, durch die die aus dem Absetzbehälter angesaugte Flüssigkeit in den im Pumpengehäuse 13 ausgebildeten Umlaufraum 45 gedrückt wird.

## Patentansprüche

1. Abscheider zur Trennung eines Feststoff-Flüssigkeitsgemisches, insbesondere von dentalem Abwasser, mit einem Einlaß (2) für das zu trennende Gemisch, mit einem Auslaß (3) für die abgetrennte Flüssigkeit, mit einer Vollmantelzentrifuge (5), die eine an der Oberseite angeordneten Einlaßöffnung (10), eine dem Flüssigkeitsauslaß (3) zugeordnete Übertrittsöffnung (11) und einen Feststoffablauf (12) aufweist, mit einem unterhalb des Feststoffablaufes (12) abnehmbar angeordneten Absetzbehälter (6) für die nach jeder Zentrifugierphase unter Schwerkrafteinwirkung mit einem Restflüssigkeitsanteil abfließenden Feststoffe, mit einer Pumpe (9), die ein sich bis oberhalb einer maximalen, vorgegebenen Sedimentationshöhe nach unten in den Absetzbehälter (6) erstreckendes Ansaugrohr (14) aufweist, und mit einer Leitung (19), die die Druckseite der Pumpe (9) mit der Einlaßöffnung (10) der Zentrifuge (5) verbindet, dadurch gekennzeichnet, daß der Einlaß (2) für das zu trennende Gemisch an der Oberseite des Absetzbehälters (6) vorgesehen ist.

2. Abscheider nach Anspruch 1, dadurch gekennzeichnet, daß er einen mit Durchtrittsöffnungen versehenen Montagegrundkörper (4) aufweist, auf dem das Zentrifugengehäuse (8) angeordnet ist, und an dem der Absetzbehälter (6) nach unten abnehmbar gehalten ist, wobei der Gemischeinlaß (2) im Montagegrundkörper (4) angeordnet ist.

3. Abscheider nach Anspruch 2, dadurch gekennzeichnet, daß sich das Zentrifugengehäuse (8) zum Montagegrundkörper (4) hin verjüngt und der Gemischeinlaß (2) in dem von der Verjüngung des Zentrifugengehäuses (8) ausgesparten Bereich (29) des Montagegrundkörpers vorgesehen ist.

4. Abscheider nach einem der Ansprüche 1 bis 3, dadurch gekennzeichnet, daß der Gemischeinlaß (2) an einem um eine zum Montagegrundkörper (4) senkrechte Achse schwenkbaren Winkelstück ausgebildet ist.

5. Abscheider nach einem der Ansprüche 1 bis 4, dadurch gekennzeichnet, daß die Pumpe (9) koaxial mit der Zentrifuge (5) angeordnet und der Feststoffablauf (12) exzentrisch durch den Montagegrundkörper (4) geführt ist.

6. Abscheider nach Anspruch 5, dadurch gekennzeichnet, daß unterhalb des Gemischeinlasses (2) das Ansaugrohr (14) der Pumpe (9) abschirmende Prallwände (21) vorgesehen sind.

7. Abscheider nach Anspruch 3 und 5, dadurch gekennzeichnet, daß die Verbindungsleitung (19) zur Einlaßöffnung (10) der Zentrifuge (5) den von der Verjüngung des Zentrifugengehäuses (8) ausgesparten Bereich (20) des Montagegrundkörpers (4) durchragt.

8. Abscheider nach einem der Ansprüche 1 bis 7, dadurch gekennzeichnet, daß der Gemischeinlaß (2) mit einem Rückschlagventil (50) versehen ist, das der Druckseite einer Hilfspumpe (51) zugeordnet ist, die das zu trennende Gemisch aus einer Luftabscheidevorrichtung (52) gegen deren Saugluftunterdruck austrägt.

9. Abscheider nach einem der Ansprüche 1 bis 7, dadurch gekennzeichnet, daß der Abscheider (1) unter dem Unterdruck der zahnärztlichen Absauganlage steht, und daß der Flüssigkeitsauslaß (3) mit einem Rückschlagventil (6) versehen ist, das der Druckseite einer Hilfspumpe (61) zugeordnet ist, die die Flüssigkeit aus dem Abscheider (1) gegen den Unterdruck austrägt.

10. Abscheider nach einem der Ansprüche 1 bis 9, dadurch gekennzeichnet, daß durch den an der Oberseite des Absetzbehälters (6) vorgesehenen Einlaß (2) von einer Luftabscheidevorrichtung (52) kommendes Gemisch einbringbar ist.

11. Abscheider nach einem der Ansprüche 1 bis 9, dadurch gekennzeichnet, daß durch den an der Oberseite des Absetzbehälters (6) vorgesehenen Einlaß (2) von einer Speischale kommendes Gemisch einbringbar ist.

## Claims

1. Separator for separating a mixture of solids and liquid, in particular waste water originating from dental practice, with an inlet (2) for the mixture that is to be separated, with an outlet (3) for the separated liquid, with a full casing centrifuge (5) that has an inlet opening (10) that is arranged on the top, a transfer opening (11) that is associated with the liquid outlet (3), and a solids drain (12), with a settling tank (6) that is arranged so as to be removable from beneath the solid drain (12) and which is for the solids that drain off with a residual fraction of the liquid under gravity after each centrifuging phase, with a pump (9) which incorporates a suction pipe (14) that extends downwards into the settling tank (6) as far as the level of a maximum pre-set sedimentation level, and with a line (19) that connects the pressure side of the pump (9) with the inlet opening (10) of the centrifuge (5), characterized in that the inlet (2) for the mixture that to be separated is provided at the top of the side of the settling tank (6).

2. Separator as defined in claim 1, characterized in that it has an installation housing (4) that is provided with transit-type openings, on which the centrifuge housing (8) is arranged, and on which the settling tank (6) is mounted so as to be removable from below, the mixture inlet (2) being arranged within the installation housing (4).

3. Separator as defined in claim 2, characterized in that the centrifuge housing (8) tapers towards the installation housing (4) and the mixture inlet (2) is provided in the space (29) left in the installation housing by the taper of the centrifuge housing (8).

4. Separator as defined in one of the claims 1 to 3, characterized in that the mixture inlet (2) is formed on an angle piece that can pivot about an axis that is perpendicular to the installation housing (4).

5. Separator as defined in one of the claims 1 to 4, characterized in that the pump (9) is arranged so as to be coaxial with the centrifuge (5) and the solids drain (12) passes eccentrically through the installation housing (4).

6. Separator as defined in claim 5, characterized in that the suction pipe (14) of the pump (9) is provided with shielding baffles (21) below the mixture inlet (2).

7. Separator as defined in claims 3 and 5, characterized in that the connecting line (19) to the inlet opening (10) of the centrifuge (5) passes through the space (20) of the installation housing (4) that is left by the taper of the centrifuge housing (8).

8. Separator as defined in one of claims 1 to 7, characterized in that the mixture inlet (2) is fitted with a non-return valve (50) that is associated with the pressure side of an auxiliary pump (51) that removes the mixture that is to be separated from an air separator (52) against the force of the suction air vacuum.

9. Separator as defined in one of the claims 1 to 7, characterized in that the separator (1) is acted upon by the vacuum of the dental suction system; and in that the liquid outlet (3) is fitted with a non-return valve (6) that is associated with the pressure side of an auxiliary pump (61) and removes the liquid from the separator (1) against the force of the suction-air vacuum.

10. Separator as defined in one of claims 1 to 9, characterized in that mixture coming from an air separator (52) is feedable through the inlet (2) provided at the top side of the settling tank (6).

11. Separator as defined in one of claims 1 to 9, characterized in that mixture coming from a spittoon is feedable trough the inlet (2) provided at the top side of settling tank (6).

## Revendications

1. Séparateur pour séparer un mélange solide/liquide, notamment des eaux usées produites dans le cadre des soins dentaires, comprenant une entrée (2) pour le mélange à séparer, une sortie (3) pour le liquide séparé, une centrifugeuse à bol plein (5) présentant une ouverture d'entrée (10) disposée sur sa face supérieure, une ouverture de débordement (11) associée à la sortie (3) pour le liquide et une évacuation (12) pour les matières solides, un récipient de décantation (6) disposé de manière amovible au-dessous de l'évacuation (12) pour les matières solides et destiné à recevoir ces dernières s'écoulant avec une fraction résiduelle de liquide après chaque phase de centrifugation sous l'effet de la force de gravité, une pompe (9) présentant un tube d'aspiration (14) orienté vers le bas dans le récipient de décantation (6), et allant jusqu'au-dessus d'un niveau maximal de sédimentation préalablement défini, ainsi qu'un conduit (19) reliant le côté refoulement de la pompe (9) avec l'ouverture d'entrée (10) de la centrifugeuse (5), caractérisé en ce que l'entrée (2) du mélange à séparer est prévue sur la face supérieure du récipient de décantation (6).

2. Séparateur selon la revendication 1, caractérisé en ce qu'il présente un corps de base de montage (4) muni d'ouvertures de passage et monté sur le carter de centrifugeuse (8), le récipient de décantation (6) étant fixé sur ledit corps (4) de manière à pouvoir être retiré vers le bas, et l'entrée (2) du mélange étant disposée dans le corps (4).

3. Séparateur selon la revendication 2, caractérisé en ce que le carter de centrifugeuse (8) va en rétrécissant en direction du corps de base de montage (4) et l'entrée (2) du mélange est aménagée dans la zone (29) du corps de base de montage créée par le rétrécissement du carter (8).

4. Séparateur selon l'une quelconque des revendications 1 à 3, caractérisé en ce que l'entrée (2) du mélange est réalisée sur une cornière pivotant autour d'un axe perpendiculaire au corps de base de montage (4).

5. Séparateur selon l'une quelconque des revendications 1 à 4, caractérisé en ce que la pompe (9) est disposée coaxialement par rapport à la centrifugeuse (5) et l'évacuation (12) pour les matières solides (12) traverse le corps de base de montage (4) de manière excentrique.

6. Séparateur selon la revendication 5, caractérisé en ce qu'il est prévu , au dessous de l'entrée (2) du mélange, des parois de rebondissements (21) qui protègent le tuyau d'aspiration (14) de la pompe (9).

7. Séparateur selon l'une quelconque des revendications 3 ou 5, caractérisé en ce que le conduit (19) assurant la liaison avec l'ouverture d'entrée (10) de la centrifugeuse (5) traverse la zone (20) du corps de base de montage (4) créée par le rétrécissement du carter de centrifugeuse (8).

8. Séparateur selon l'une quelconque des revendications 1 à 7, caractérisé en ce que l'entrée (2) du mélange est munie d'un clapet anti-retour (50) associé au côté refoulement d'une pompe auxiliaire (51) qui évacue le mélange à séparer d'un dispositif de séparation d'air (52) à l'encontre de la dépression de l'air d'aspiration de ce dernier.

9. Séparateur selon l'une quelconque des revendications 1 à 7, caractérisé en ce que le séparateur (1) est soumis à la dépression de l'installation d'aspiration dentaire, et en ce que la sortie (3) pour le liquide (3) est munie d'un clapet anti-retour (6) associé au côté refoulement d'une pompe auxiliaire (61) évacuant le liquide du séparateur (1) à l'encontre de la dépression.

10. Séparateur selon l'une quelconque des revendications 1 à 9, caractérisé en ce que l'entrée (2) prévue sur la face supérieure du récipient de décantation (6) permet d'introduire un mélange provenant d'un dispositif de séparation d'air (52).

11. Séparateur selon l'une quelconque des revendications 1 à 9, caractérisé en ce que l'entrée (2) prévue sur la face supérieure du récipient de décantation (6) permet d'introduire un mélange provenant d'un crachoir.
